# EUROPÄISCHE PATENTSCHRIFT

(11) **EP 2 325 533 B1**
(45) Veröffentlichungstag und Bekanntmachung des Hinweises auf die Patenterteilung: **13.09.2017**
(21) Anmeldenummer: 10014458.3
(22) Anmeldetag: 10.11.2010
(51) Int. Cl.: F16K 31/50, F16K 1/10

(54) **Ventiloberteil**
Valve top
Partie supérieure de soupape

(30) Priorität: 19.11.2009 DE 102009054010
(43) Veröffentlichungstag der Anmeldung: 25.05.2011
(73) Patentinhaber: Flühs Drehtechnik GmbH, D-58515 Lüdenscheid (DE)
(72) Erfinder: Thurau, Friedrich, 58849 Herscheid (DE)
(74) Vertreter: Patentanwälte Dörner & Kötter PartG mbB

(56) Entgegenhaltungen:
- EP-A1- 0 471 643
- DE-A1- 19 653 419
- DE-C1- 19 705 982
- DE-U1- 9 418 554
- DE-U1- 20 116 280
- DE-U1- 29 822 813

## Beschreibung

Die Erfindung betrifft ein Ventiloberteil nach dem Patentanspruch 1.

Derartige Ventiloberteile werden in Absperrarmaturen als so genannte Freistromventile eingesetzt. Dabei ist an einem Kolben ein Dichtungselement angeordnet, welches innerhalb der Armatur in den Leitungsweg einbringbar ist, wodurch der Durchfluss gesperrt ist. Dabei ist der Kolben schräg zur Leitung angeordnet und mit einem Handrad verbunden, über das der Kolben bewegbar ist. Zur Rückflussverhinderung ist der Kolben regelmäßig über eine Druckfeder in Richtung der Dichtfläche vorgespannt.

Ventiloberteile der vorgenannten Art weisen regelmäßig eine steigende Spindel auf, wodurch der erforderliche Bedienraum vergrößert ist. Der vorliegenden Erfindung liegt die Aufgabe zugrunde, ein Ventiloberteil der vorgenannten Art zu schaffen, bei dem die Spindel axial fixiert ist, wodurch eine Bedienung auch in räumlich beengten Einbausituationen ermöglicht ist. Gemäß der Erfindung wird diese Aufgabe durch die Merkmale des Patentanspruchs 1 gelöst. Ein gattungsgemäßes Ventiloberteil ist in der DE 197 05 982 beschrieben.

Mit der Erfindung ist ein Ventiloberteil geschaffen, bei dem die Spindel fixiert ist, sodass eine Bedienung auch bei begrenztem Bedienraum ermöglicht ist. Dabei ist die Hülse mit einem Druckstück verbunden, das in dem Kopfstück axial verschiebbar gelagert ist und über ein Innengewinde mit einem Außengewinde der Spindel im Eingriff steht. Hierdurch ist eine vollständige Abkapselung gegenüber dem Rückschlagkolben ermöglicht, sodass relativ zueinander bewegliche Teile gefettet werden können, ohne dass das Fett mit dem Wasser in Berührung kommt (Fettkammer).

In Ausgestaltung der Erfindung weist die Hülse an ihrem offenen Ende eine in Richtung des Rückschlagkolbens gebogene Bördelkante auf, durch die der Rückschlagkolben in der Hülse verliersicher gehalten ist. Hierdurch ist ein einteiliges Ventiloberteil bewirkt, welches einfach montierbar ist.

In weiterer Ausgestaltung der Erfindung weist der Rückschlagkolben einen umlaufenden Kragen auf, mit dem er an der Hülse anliegt. Mit Hilfe des Kragens ist im Zuge der Montage eine einfache Umbiegung der Bördelkante der Hülse ermöglicht, wodurch der Rückschlagkolben verliersicher gehalten ist. Darüber hinaus ist durch den Kragen ein Anschlag des Rückschlagkolbens gebildet. Erfmdungsgemäss weist das Druckstück ein Innengewinde auf, das mit einem Außengewinde der Hülse im Eingriff ist. Hierdurch ist eine lösbare Verbindung zwischen Hülse und Druckstück ermöglicht.

In Ausgestaltung der Erfindung ist die Innenwandung des Kopfstücks zumindest teilweise als Innenvielkant ausgebildet, wobei das Druckstück zumindest teilweise außen mit einem korrespondierenden Außenvielkant versehen ist, über den es innerhalb des Kopfstücks axial verschiebbar geführt ist. Hierdurch ist eine axiale Führung des Druckstücks bewirkt. Bevorzugt weist das Druckstück einen umlaufenden Kragen auf, der als Außenvielkant ausgebildet ist.

In Ausgestaltung der Erfindung ist das Kopfstück mit einem Gewindedeckel verschlossen, der von der Spindel durchdrungen ist. Hierdurch ist eine einfache Demontage des Ventiloberteils ermöglicht.

In Weiterbildung der Erfindung ist der Rückschlagkolben an dem der Hülse zugewandten Ende als Vielkant ausgebildet. Hierdurch ist ein Entweichen von durch die Bewegung des Rückschlagkolbens verdrängten Wasservolumen ermöglicht.

In weiterer Ausgestaltung der Erfindung ist der Rückschlagkolben mit einer nichtmetallischen Gleitschicht versehen. Hierdurch ist eine dauerhafte gute Beweglichkeit des Rückschlagkolbens bewirkt. Weiterhin ist einer Korrosion des Rückschlagkolbens entgegengewirkt. Bevorzugt ist die Gleitschicht durch eine Kunststoffbeschichtung, insbesondere eine Teflonbeschichtung gebildet.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

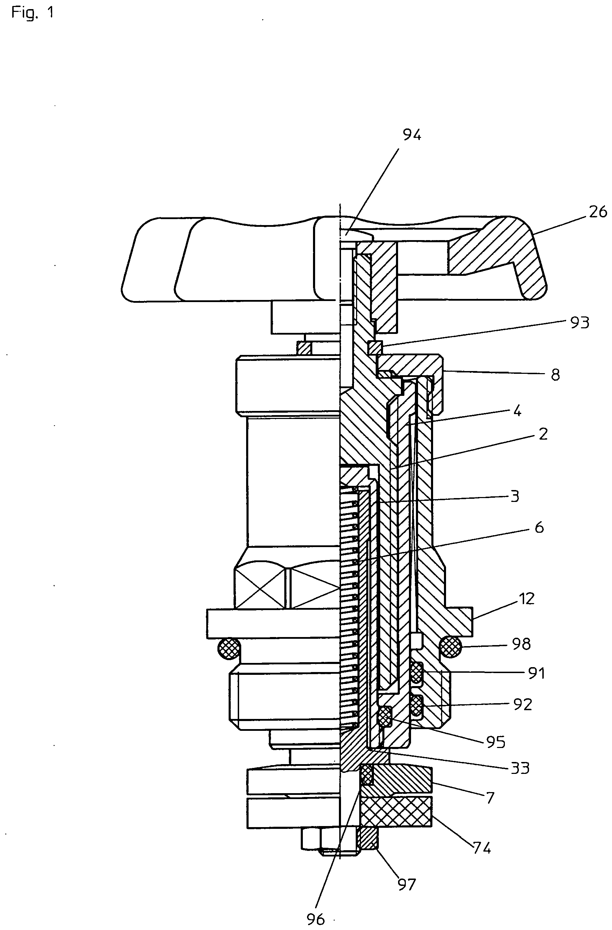

- Fig. 1: die Darstellung eines Ventiloberteils im Teilschnitt;

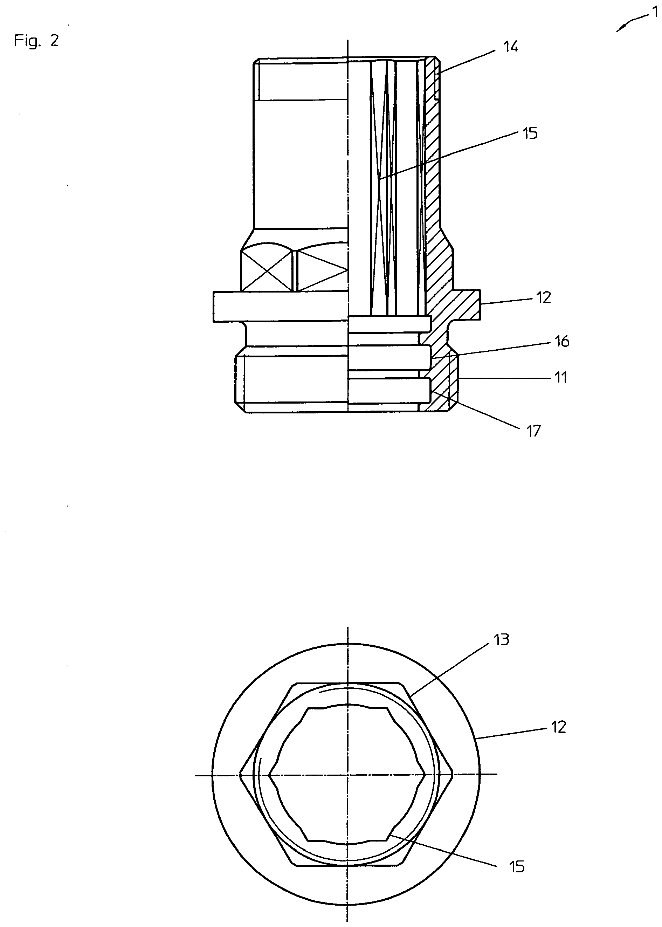

- Fig. 2: die Darstellung des Kopfstücks des Ventiloberteils aus Figur 1
a) im Teilschnitt
b) in der Draufsicht;

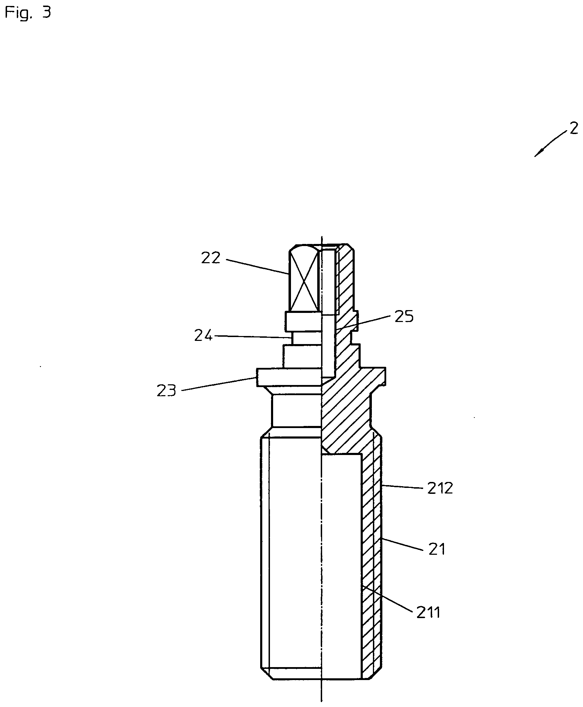

- Fig. 3: die Darstellung der Spindel des Ventiloberteils aus Figur 1 im Teilschnitt;

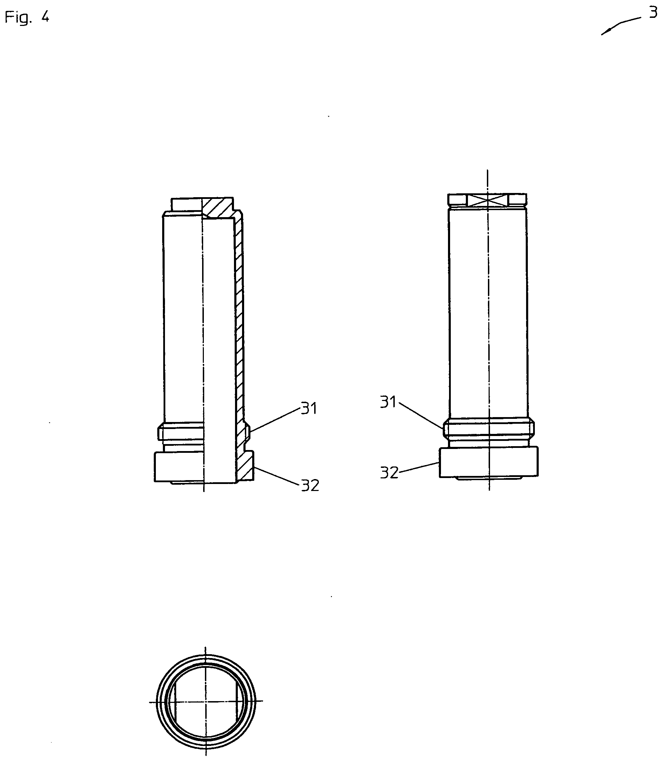

- Fig. 4: die Darstellung der Hülse des Ventiloberteils aus Figur 1
a) im Teilschnitt
b) in der Seitenansicht
c) in der Draufsicht;

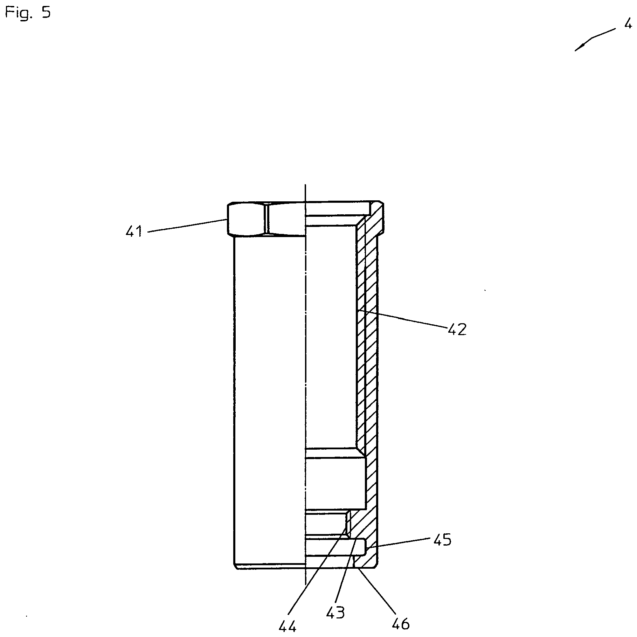

- Fig. 5: die Darstellung des Druckstücks des Ventiloberteils aus Figur 1 im Teilschnitt;

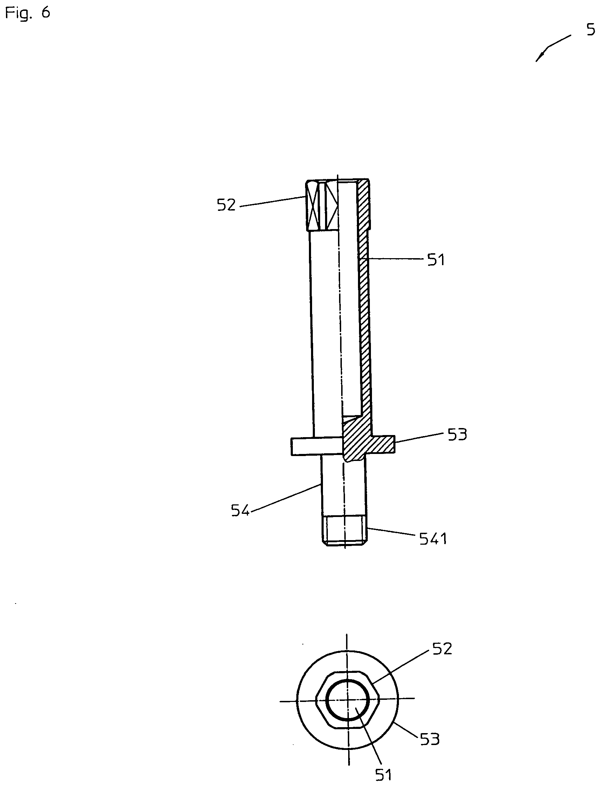

- Fig. 6: die Darstellung des Rückschlagkolbens des Ventiloberteils aus Figur 1
a) im Teilschnitt
b) in der Draufsicht;

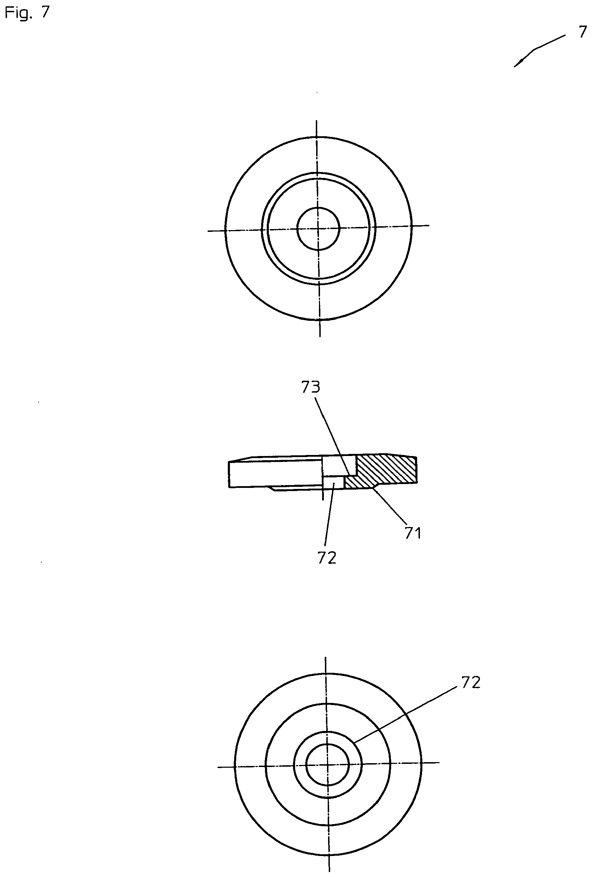

- Fig. 7: die Darstellung der Kegelscheibe des Ventiloberteils aus Figur 1
a) in der Draufsicht
b) im Teilschnitt
c) in der Ansicht von unten und

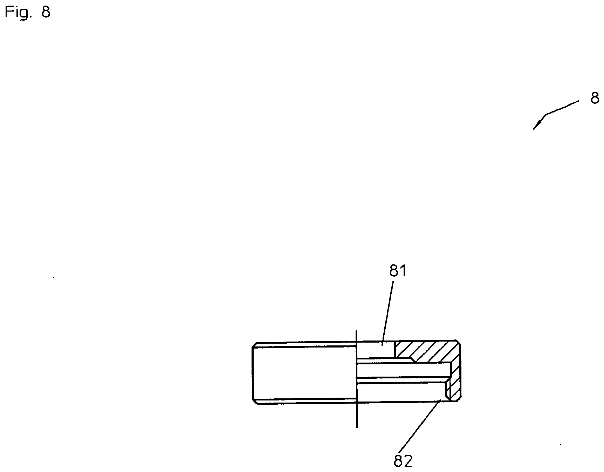

- Fig. 8: die Darstellung des Gewindedeckels des Ventiloberteils aus Figur 1 im Teilschnitt.

Das als Ausführungsbeispiel gewählte Ventiloberteil besteht im Wesentlichen aus einem Kopfstück 1, das von einer Spindel 2 durchdrungen ist, welche mit einem Druckstück 4 in Eingriff steht und die eine Hülse 3 aufnimmt, in der ein Rückschlagkolben 5 angeordnet ist, an dem eine Kegelscheibe 7 befestigt ist.

Das Kopfstück 1 ist ein weitgehend hohlzylindrisch ausgeführtes Messingdrehteil. An seinem unteren, armaturseitigen Ende ist an dem Kopfstück 1 ein Gewinde 11 angebracht, welches von einem umlaufenden Kragen 12 begrenzt ist. An den Kragen 12 schließt sich ein Sechskant 13 an, der in einen Außendurchmesser verjüngten Abschnitt übergeht, an dessen Ende ein Gewinde 14 zur Aufnahme des Gewindedeckels 8 eingebracht ist. Innen ist in das Kopfstück ein Innensechskant 15 zur Führung des Druckstücks 4 eingebracht. An seiner dem Außengewinde 11 entgegengesetzten Innenseite sind in das Kopfstück 1 parallel zueinander zwei Nuten 16, 17 zur Aufnahme von O-Ringen 91, 92 eingebracht.

Die Spindel 2 ist als im Wesentlichen zylinderförmig ausgebildetes Messingdrehteil ausgeführt. Die Spindel 2 ist unterteilt in einen zylindrischen Abschnitt 21 und einen vierkantförmig ausgebildeten Abschnitt 22, zwischen denen ein umlaufender Kragen 23 angeordnet ist. Zwischen dem Kragen 23 und dem Vierkantabschnitt 22 ist eine Nut 24 zur Aufnahme eines Sicherungsrings 93 eingebracht. In dem zylindrischen Abschnitt 21 ist zentrisch in die Spindel 2 eine Bohrung 211 zur Aufnahme der Hülse 3 eingebracht. Außen ist der zylindrische Abschnitt 21 mit einem Außengewinde 212 versehen. In dem Vierkantabschnitt 22 ist die Spindel 2 zentrisch eine Gewindesackbohrung 25 zur Aufnahme einer Schraube 94 zur Befestigung eines auf den Innensechskant 22 aufschiebbaren Handrades 26 eingebracht.

Die Hülse 3 ist als hohlzylindrisches Messingdrehteil ausgeführt. An ihrem der Armatur zugewandten Ende ist umlaufend ein Kragen 32 angeformt. Oberhalb des Kragens 32 ist weiterhin ein Außengewinde 31 angeordnet.

Das Druckstück 4 ist als hohlzylindrisches Messingdrehteil ausgeführt. An seinem dem Gewindedeckel 8 zugewandten Ende ist umlaufend ein als Sechskant ausgeführter Kragen 41 angeformt. Innen ist in dem Druckstück 4 auf etwa zwei Drittel seiner Länge ein Innengewinde 42 angeordnet. Beabstandet zu dem Innengewinde 42 ist innen ein Absatz 43 angeformt, der mit einem Innengewinde 44 versehen ist. An seinem armaturseitigen Ende weist das Druckstück 4 einen umlaufenden Absatz 46 auf, der mit dem gegenüberliegenden Absatz 43 eine Nut 45 zur Aufnahme eines O-Rings 95 begrenzt.

Der Rückschlagkolben 5 ist im Wesentlichen als zylinderförmiges Messingdrehteil ausgeführt. An seinem der Hülse 3 zugewandten Ende ist in den Rückschlagkolben 5 axial eine Bohrung 51 zur Aufnahme einer Feder 6 eingebracht, die sich bis oberhalb eines außen umlaufend an dem Rückschlagkolben 5 angeformten Kragen 53 erstreckt. Weiterhin weist der Rückschlagkolben 5 an seinem der Spindel 2 zugewandten Ende außen einen Außenvielkant 52 auf. An den Kragen 53 des Rückschlagkolbens 5 schließt sich ein Gewindestift 54 zur Aufnahme der Kegelscheibe 7 an. Der Rückschlagkolben 5 ist in dem gesamten innerhalb der Hülse 3 bewegbaren Bereich, das heißt von dem Kragen 53 bis hin zu seinem Außenvielkant 52 zugewandten Ende mit einer Teflonschicht versehen.

Die Kegelscheibe 7 ist im Ausführungsbeispiel als Messingdrehteil ausgeführt. An ihrer dem Kopfstück 1 abgewandten Seite ist an die Kegelscheibe 7 ein kegelförmiger Absatz 71 angeformt. Die Kegelscheibe 7 ist zentrisch mit einer Stufenbohrung 72 versehen, welche im Bereich des Übergangs zum kegelförmigen Absatz 71 einen Absatz 73 aufweist.

Der Gewindedeckel 8 ist im Ausführungsbeispiel als becherförmiges Messingdrehteil ausgeführt. An seinem dem Handrad 26 zugewandten Ende ist in den Gewindedeckel eine Bohrung 81 zur Durchführung der Spindel 2 eingebracht. An seinem dem Kopfstück 1 zugewandten Ende ist in dem Gewindedeckel 8 innen ein Innengewinde 82 angeordnet.

In montiertem Zustand ist das Druckstück 4 mit seinem Innengewinde 42 auf das Außengewinde 212 der Spindel 2 geschraubt. In die Bohrung 211 der Spindel 2 ist die Hülse 3 eingebracht, welche wiederum mit ihrem Außengewinde 31 mit dem Gewinde 44 des Druckstücks 4 verschraubt ist. Der Kragen 32 der Hülse 3 liegt dabei an dem Absatz 43 des Druckstücks 4 an. Die so gebildete Anordnung aus Spindel 2, Hülse 3 und Druckstück 4 ist in das Kopfstück 1 eingebracht, auf das die Gewindehülse 8 aufgeschraubt ist, wobei die Spindel 2 durch die Bohrung 81 der Gewindehülse 8 hindurchragt und mit einem Sicherungsring 93, der in die Nut 24 der Spindel 2 eingebracht ist, fixiert ist. Der als Sechskant ausgebildete Kragen 41 des Druckstücks 4 ist dabei in dem Innensechskant 15 des Kopfstücks 1 geführt. Das Druckstück 4 ist gegenüber dem Kopfstück 1 über O-Ringe 91, 92, welche in den Nuten 16, 17 des Kopfstücks 1 angeordnet ist, abgedichtet. Die Hülse 3 ist über ein O-Ring 95 gegenüber dem Druckstück 4 abgedichtet, welcher in der Nut 45 des Druckstücks 4 angeordnet ist. Auf dem Sechskantabschnitt 22 der Spindel 2 ist ein Handrad 36 aufgeschoben und mittels einer Schraube 94, welche in die Gewindesackbohrung 25 der Spindel 2 eingeschraubt ist, fixiert.

Der Rückschlagkolben 5 ist mit seinem dem Außenvielkant 52 zugewandten Ende in die Hülse 3 eingebracht, wobei in der Bohrung 51 des Rückschlagkolbens 5 eine Schraubenfeder 6 angeordnet ist. Bei der Montage wird der Kragen 53 des Rückschlagkolbens 5 gegen eine an dem dem Kragen 53 zugewandten Ende der Hülse 3 angeordneten Bördelkante 33 gepresst, wodurch diese Bördelkante 33 nach innen umgebogen wird. Hierdurch ist der Rückschlagkolben 5 in der Hülse 3 verliersicher gehalten. Da der endseitig an dem Rückschlagkolben 5 angeformte Außenvielkant 52 über den Außendurchmesser des Rückschlagkolbens 5 hinausragt, ist ein Austreten des Rückschlagkolbens 5 aus der Hülse 3 nunmehr verhindert.

Auf dem Gewindestift 54 des Rückschlagkolbens 5 ist die Kegelscheibe 7 derart aufgebracht, dass der kegelförmige Absatz 71 in Richtung des Kopfstücks 1 gerichtet ist. Dabei ist in dem Absatz 53 der Kegelscheibe 7 ein O-Ring 96 eingebracht. An der Kegelscheibe 7 anliegend ist eine dem Durchmesser der Kegelscheibe 7 entsprechende Kunststoffscheibe 74 angeordnet. Die Kegelscheibe 7 und Kunststoffscheibe 74 sind mittels einer Mutter 97, die auf das Gewinde 541 des Gewindestücks 54 aufgeschraubt ist, an dem Rückschlagkolben 5 befestigt. Außen ist an dem Kopfstück 1 unterhalb des Kragens 12 ein O-Ring 98 zur Abdichtung gegenüber einer Armatur angeordnet.

## Patentansprüche

1. Ventiloberteil, umfassend ein Kopfstück (1), in dem eine Spindel (2) drehbar, jedoch axial fixiert gelagert ist und die einen Rückschlagkolben (5) aufnimmt, wobei zwischen Spindel (2) und Rückschlagkolben (5) eine Hülse (3) angeordnet ist, in welcher der Rückschlagkolben (5) aufgenommen und über die er durch Drehung der Spindel (2) axial verschiebbar ist, und wobei die Hülse (3) mit einem Druckstück (4) verbunden ist, das in dem Kopfstück (1) axial verschiebbar gelagert ist **dadurch gekennzeichnet, dass** das Druckstück (4) über ein Innengewinde (42) mit einem Außengewinde (212) der Spindel (2) im Eingriff steht, wobei beabstandet zu dem Innengewinde (42) innen an das Druckstück (4) ein Absatz (43) angeformt ist, der mit einem Innengewinde (44) versehen ist, über welches das Druckstück (4) mit einem an der Hülse (3) angeordneten Außengewinde (31) verschraubt ist und wobei das Druckstück (4) über O-Ringe (91, 92, 95) gegenüber dem Kopfstück (1) sowie der Hülse (3) abgedichtet ist.

2. Ventiloberteil nach Anspruch 1, **dadurch gekennzeichnet, dass** die Hülse (3) an ihrem offenen Ende eine in Richtung des Rückschlagkolbens (5) gebogene Bördelkante (33) aufweist, durch die der Rückschlagkolben (5) in der Hülse (3) verliersicher gehalten ist.

3. Ventiloberteil nach einem der vorgenannten Ansprüche, **dadurch gekennzeichnet, dass** der Rückschlagkolben (5) einen umlaufenden Kragen (53) aufweist, mit dem er an der Hülse (3) anliegt.

4. Ventiloberteil nach einem der vorgenannten Ansprüche, **dadurch gekennzeichnet, dass** die Innenwandung des Kopfstücks (1) zumindest teilweise als Innenvielkant ausgebildet ist, wobei das Druckstück (4) zumindest teilweise außen mit einem korrespondierenden Außenvielkant versehen ist, über den es innerhalb des Kopfstücks (1) axial verschiebbar geführt ist.

5. Ventiloberteil nach Anspruch 4, **dadurch gekennzeichnet, dass** das Druckstück einen umlaufenden Kragen (41) aufweist, der als Außenvielkant ausgebildet ist.

6. Ventiloberteil nach einem der vorgenannten Ansprüche, **dadurch gekennzeichnet, dass** das Kopfstück (1) mit einem Gewindedeckel (8) verschlossen ist, der von der Spindel (2) durchdrungen ist.

7. Ventiloberteil nach einem der vorgenannten Ansprüche, **dadurch gekennzeichnet, dass** der Rückschlagkolben (5) unter dem Einfluss einer Feder (6) steht.

8. Ventiloberteil nach einem der vorgenannten Ansprüche, **dadurch gekennzeichnet, dass** der Rückschlagkolben (5) an seinem der Hülse (3) zugewandten Ende als Vielkant ausgebildet ist.

9. Ventiloberteil nach einem der vorgenannten Ansprüche, **dadurch gekennzeichnet, dass** der Rückschlagkolben (5) mit einer nichtmetallischen Gleitschicht versehen ist.

10. Ventiloberteil nach Anspruch 9, **dadurch gekennzeichnet, dass** die Gleitschicht durch eine Kunststoffbeschichtung, vorzugsweise einer Teflonbeschichtung gebildet ist.

## Claims

1. Valve top having a head piece (1) in which a spindle (2) is rotatably but axially immovably mounted and which receives a non-return piston (5), wherein between the spindle (2) and the non-return piston (5) a sleeve (3) in which the non-return piston (5) is received and by means of which the spindle (2) can be axially displaced by turning is disposed and wherein the sleeve (3) is connected to a pressure piece (4) that is mounted axially movably in the head piece (1), **characterised in that** the pressure piece (4) engages with an external screw thread (212) on the spindle (2) by means of an internal screw thread (42), where a shoulder (43) is formed inside the pressure piece (4) at a distance from the internal screw thread (42) which shoulder (43) is provided with an internal screw thread (44), by means of which the pressure piece (4) is bolted to an external screw thread (31) disposed on the sleeve (3) and where the pressure piece (4) is sealed off from the head piece (1) and the sleeve (3) by means of O rings (91, 92, 95).

2. Valve top in accordance with claim 1, **characterised in that** the sleeve (3) incorporates at its open end a flanged edge (33) that is bent in the direction of the non-return piston (5) and by means of which the non-return piston (5) is held unlosably in the sleeve (3).

3. Valve top in accordance with any one of the foregoing claims, **characterised in that** the non-return piston (5) incorporates a collar (53) running all the way round by which it rests against the sleeve (3).

4. Valve top in accordance with any one of the foregoing claims, **characterised in that** the inner wall of the head piece (1) is at least partly formed as an internal polyhedron, where the pressure piece (4) is provided at least partly externally with a corresponding external polyhedral portion by means of which it is guided axially movably inside the head piece (1).

5. Valve top in accordance with claim 4, **characterised in that** the pressure piece incorporates a collar (41) constructed in the form of an external polyhedron and running all the way round.

6. Valve top in accordance with any one of the foregoing claims, **characterised in that** the head piece (1) is sealed with a screw-threaded cover (8) through which the spindle (2) runs.

7. Valve top in accordance with any one of the foregoing claims, **characterised in that** the non-return piston (5) is acted on by a spring (6).

8. Valve top in accordance with any one of the foregoing claims, **characterised in that** the non-return piston (5) is at its end facing the sleeve (3) constructed in the form of a polyhedron.

9. Valve top in accordance with any one of the aforementioned claims, **characterised in that** the non-return piston (5) is provided with a non-metallic slip coating.

10. Valve top in accordance with claim 9, **characterised in that** the slip coating is in the form of a plastic coating, preferably a Teflon coating.

## Revendications

1. Partie supérieure de soupape, comprenant une pièce têtière (1), dans laquelle une broche (2) est en appui rotatif mais immobilisée selon le plan axial et qui reçoit un piston antiretour (5), sachant qu'entre la broche (2) et le piston antiretour (5) est disposée une douille (3) dans laquelle est logé le piston antiretour (5) et via laquelle il est possible de le déplacer axialement par rotation de la broche (2), et sachant que la douille (3) est reliée à une pièce de compression (4) en appui permettant à ladite pièce de se déplacer axialement dans la pièce têtière (1), **caractérisée en ce que** la pièce de compression (4) se trouve, via un filetage intérieur (42), en engrènement avec un filetage extérieur (212) de la broche (2), sachant qu'à une certaine distance du filetage intérieur (42) a été formé à l'intérieur un épaulement (43) contre la pièce de compression (4), épaulement qui est muni d'un filetage intérieur (44) via lequel la pièce de compression (4) est vissée contre un filetage extérieur (31) disposé contre la douille (3), et sachant que la pièce de compression (4) est étanchéisée via des joints toriques (91, 92, 95) par rapport à la pièce têtière (1) ainsi qu'à la douille (3).

2. Partie supérieure de soupape selon la revendication 1, **caractérisée en ce que** la douille (3) présente, contre son extrémité ouverte, une arête de bordage (33) coudée en direction du piston antiretour (5), arête de bordage grâce à laquelle le piston antiretour (5) est maintenu dans la douille (3) sans risque de le perdre.

3. Partie supérieure de soupape selon l'une des revendications précédentes, **caractérisée en ce que** le piston antiretour (5) présente un col (53) périphérique par lequel il applique contre la douille (3).

4. Partie supérieure de soupape selon l'une des revendications précédentes, **caractérisée en ce que** la paroi intérieure de la pièce têtière (1) est configurée au moins en partie comme creux polygonal, sachant que la pièce de compression (4) est munie au moins en partie à l'extérieur d'un embout polygonal intérieur épousant le creux, embout via lequel la pièce de compression est guidée de façon à pouvoir se déplacement axialement à l'intérieur de la pièce têtière (1).

5. Partie supérieure de soupape selon la revendication 4, **caractérisée en ce que** la pièce de compression présente un col (41) périphérique configuré en embout polygonal extérieur.

6. Partie supérieure de soupape selon l'une des revendications précédentes, **caractérisée en ce que** la pièce têtière (1) est obturée par un couvercle fileté (8) traversé par la broche (2).

7. Partie supérieure de soupape selon l'une des revendications précédentes, **caractérisée en ce que** le piston antiretour (5) se trouve sous l'influence d'un ressort (6).

8. Partie supérieure de soupape selon l'une des revendications précédentes, **caractérisée en ce que** le piston antiretour (5) est configuré, en son extrémité regardant la douille (3), sous forme d'embout polygonal.

9. Partie supérieure de soupape selon l'une des revendications précédentes, **caractérisée en ce que** le piston antiretour (5) est muni d'une couche de glissement non métallique.

10. Partie supérieure de soupape selon la revendication 9, **caractérisée en ce que** la couche de glissement est formée par un revêtement en plastique, de préférence un revêtement en téflon.
